# EUROPEAN PATENT SPECIFICATION

(11) **EP 3 795 111 B1**
(45) Date of publication and mention of the grant of the patent: **21.06.2023**
(21) Application number: 20196981.3
(22) Date of filing: 18.09.2020
(51) Int. Cl.: A61C 1/08, A61C 8/00, A61C 9/00, A61C 13/00, B33Y 80/00, B33Y 10/00

(54) **METHOD OF MANUFACTURING A DENTAL IMPLANT PROSTHETIC KIT**
VERFAHREN ZUR HERSTELLUNG EINES PROTHESEN-ZAHNIMPLANTAT-KITS
PROCEDE DE FABRICATION D'UN KIT DE DENTURE ET D'IMPLANT DENTAIRE

(30) Priority: 19.09.2019 IT 201900016676
(43) Date of publication of application: 24.03.2021
(73) Proprietor: Laboratorio Dentale Santa Teresa S.r.l., 48121 Ravenna (IT)
(72) Inventor: PEZZI, Monica, 48121 Ravenna (IT); FUSCONI, Fabio, 48121 Ravenna (IT)
(74) Representative: Bergadano, Mirko

(56) References cited:
- US-A1- 2009 042 167
- US-A1- 2014 203 463
- US-A1- 2019 247 149

## Description

### TECHNICAL FIELD

The present invention relates to a method to manufacture a dental implant-prosthetic kit, i.e. a kit comprising at least one endosseous implant, at least two burs for preparing the bone for the insertion of the endosseous implant, a surgical guide for guiding the burs during the preparation of the bone, at least one dental prosthesis and one abutment coupleable, at one end, with the endosseous implant and, at the opposite end, with the dental prosthesis.

### BACKGROUND ART

As is known, the application of a dental implant-prosthetic assembly to a patient for replacing at least one damaged or missing tooth involves the insertion of an endosseous implant, also more simply known as dental implant, in the maxilla or mandible of the patient in the area where the damaged tooth has been removed, the creation of a dental prosthesis, otherwise known as prosthetic product or crown, which reproduces the shape of the removed tooth, the coupling of an abutment with the endosseous implant and the application of the dental prosthesis to the abutment.

The design of the implant-prosthetic assembly can be carried out in an "analogue" manner, i.e. with more traditional techniques, or in a computerized manner, i.e. using a suitable surgical planning CAD software that displays X-ray data of the bone structure of the oral cavity of a patient, such data being previously acquired by computerized axial tomography, and allows the dentist to choose the type and size of the endosseous implant and its position in the bone. The surgical planning software allows the dentist to model a surgical guide for guiding a bur during the preparation of the bone for the insertion of the endosseous implant.

The endosseous implant essentially consists of a screw having a blind hole suitably shaped transversely to couple with a portion of the abutment according to a plurality of positioning indices, i.e. a plurality of angular coupling positions of predefined shape, for example a polygonal section hole, which allow the dentist to select a certain and solid coupling position. The surgical planning software allows the dentist to select a certain positioning index, i.e. a certain reciprocal angular position between the endosseous implant and the abutment, and therefore between the endosseous implant and the dental prosthesis.

The abutment and the dental prosthesis are normally modelled by the dental technician after the endosseous implant has been inserted into the oral cavity of the patient. In particular, the position of the endosseous implant in the oral cavity is acquired by taking a dental impression in a traditional manner or by performing an intra-oral scan through the use of a so-called scan-abutment, i.e. a dummy abutment suitably positioned on the endosseous implant.

The dental technician models the abutment and the dental prosthesis by means of a suitable dental modelling CAD software based on the intra-oral scan.

The set consisting of abutment and dental prosthesis is then mounted on the endosseous implant according to the positioning index of the implant connection.

Practice has shown that the design methodology described above has a high probability of failure in the case it is decided to place the endosseous implant and dental prosthesis in the same session manufacturing the prosthetic components (abutment and dental prosthesis) in advance with respect to the surgical intervention. In fact, if the dentist fails to screw the endosseous implant into the bone up to orienting the shaped hole of the desired angle, he/she may not manage to position the dental prosthesis correctly. To overcome such drawback, a very complex surgical guide is manufactured provided with notched indicators for aiding the dentist.

Whereas, in the case of deferred positioning over time of the prosthetic components with respect to the positioning of the implant, if all goes well, at least three sessions are necessary for applying the implant-prosthetic assembly to the patient, with all the relevant organizational drawbacks for patient and dentist. In fact, a first session is for inserting the implant, a second session is for performing the intra-oral scan with the scan-abutment and at least a third session is for mounting the dental prosthesis.

United States Patent Application No. US2009/0042167A1 discloses a method for manufacturing a tooth prosthesis for insertion in a jawbone, the tooth prosthesis including an implant and an abutment on top of the implant. The method comprises the following steps: defining a shape of the prosthesis and its location in the jawbone by using first data from a first CT scan image of the jawbone and second data from a second image of a gypsum cast; correlating first and second data by extracting from the first data a first position reference data of a first reference in the first image, and from the second data a second position reference data of a second reference in the second image, the second reference being identical to the first reference; and performing a geometric transformation on the second data and/or the first data to have a coincidence of the second image with the first image and to combine the first and second data into composite scan data.

### DISCLOSURE OF INVENTION

The object of the present invention is to provide a method for designing and manufacturing a dental implant-prosthetic assembly, which is free from the drawbacks described above and, at the same time, is easy and cost-effective to manufacture.

According to the present invention, a method for manufacturing a dental implant-prosthetic kit is provided, as defined in the appended claims.

### BRIEF DESCRIPTION OF THE DRAWINGS

The present invention will now be described with reference to the accompanying drawings, which show a nonlimiting example thereof, wherein:
- Figure 1 illustrates the dental implant-prosthetic kit obtained with the method for manufacturing a dental implant-prosthetic kit of the present invention; and
- Figures 2 to 11 illustrate respective design steps of the method for manufacturing a dental implant-prosthetic kit.

### BEST MODE FOR CARRYING OUT THE INVENTION

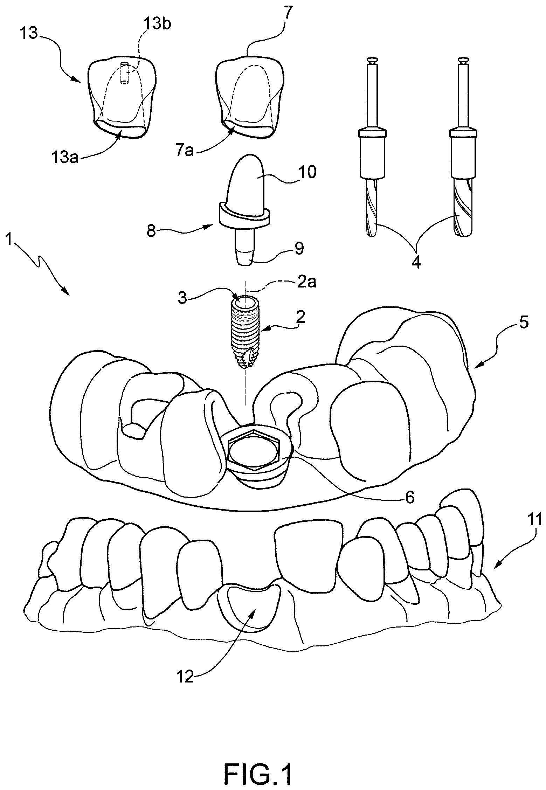

In Figure 1, reference numeral 1 indicates, as a whole, a dental implant-prosthetic kit comprising at least one endosseous implant 2 having a blind hole 3 coaxial to a longitudinal axis 2a of the endosseous implant 2, at least two burs 4 of different diameter for preparing the bone of the maxilla or mandible of a patient for the insertion of the endosseous implant 2, a surgical guide 5 provided with at least one bushing 6 for guiding the burs 4 during the preparation of the bone, at least one dental prosthesis 7, and at least one abutment 8, which comprises a first portion 9 engageable with interference in the hole 3 by means of conical coupling and a second portion 10 shaped so as to define a shape coupling with a cavity 7a of the dental prosthesis 7. In other words, the cavity 7a has a shape that is complementary to the shape of the portion 10.

The portion 9 is a conical coupling element of commercial type, also known as "T-base" or "TiBase" or "OTA" (One Time Abutment), which is supplied in combination with a corresponding endosseous implant 2. The conical coupling between portion 9 and endosseous implant 2, otherwise known as conometric connection, has dimensions that do not change with the varying of the outer dimensions (length and diameter) of the endosseous implant 2. The portion 9 has a shape and height defined according to the needs of the case and once positioned in the oral cavity, coupled with the endosseous implant 2, it is no longer removed.

The materials of the various components are known. For example, the endosseous implant 2 and the portion 9 are made of titanium, the portion 10 of the abutment 8 is made of sintered zirconia (zirconium oxide) or titanium, and the dental prosthesis 7 is made of PMMA (Polymethylmethacrylate).

In the example of Figure 1, the dental implant-prosthetic kit 1 is for the replacement of an upper central incisor tooth and the surgical guide 5 adapts, precisely, to a portion of an upper dental arch 11, which is shown upside down and with the tooth to be replaced already removed leaving a space 12 wherein to insert the dental prosthesis 7, after applying the endosseous implant 2 and the abutment 8.

Furthermore, the dental implant-prosthetic kit 1 comprises a positioning coping 13, which has the same outer shape as the dental prosthesis 7 and a cavity 13a having the same shape as the cavity 7a and has a hole 13b that is through for the passage of a screw for fixing the abutment 8 to the endosseous implant 2 in the correct angular position. The positioning coping 13 is made for example of PMMA. As will be better explained hereafter in the present document, the positioning coping 13 serves to facilitate the correct angular positioning of the abutment 8 with respect to the endosseous implant 2 before fixing the abutment 8 to the endosseous implant 2 and therefore the correct final positioning of the dental prosthesis 7. In particular, the positioning coping 13 is advantageously used when the dental prosthesis 7 is to be inserted in an aesthetic area of the dental arch.

The dental implant-prosthetic kit 1 is designed by means of more CAD software following the method described hereafter.

First of all, X-ray data of the bone structure of the oral cavity of the patient in a known manner through computerized axial tomography, and a digital dental impression of the dental arch of the patient where there is or was a damaged or missing tooth to be replaced are acquired. The X-ray data are in the so-called DICOM format. The digital dental impression is a virtual dental impression model which can be imported into a CAD software, for example a model in the known STL format.

The digital dental impression can be acquired in two known alternative modes. In a first mode, using known techniques and materials, a negative cast of the dental arch is obtained by means of a suitable self-hardening soft paste and then a positive model of the dental impression is made using gypsum or resin starting from the negative cast. The positive model is digitized through a scanner to thus obtain a digital dental impression. In a second mode, the digital dental impression is acquired directly in the oral cavity through an intra-oral scanner.

The digital dental impression is imported into a first CAD software for the prosthetic modelling of a known type, through which a dental technician processes the digital dental impression to create a digital diagnostic wax-up in the place where the damaged or missing tooth was. In essence, the digital diagnostic wax-up is a virtual model of a dental prosthesis prototype. If the damaged tooth has not been removed from the patient before acquiring the digital dental impression, then the dental technician processes the digital dental impression to remove the part that represents the damaged tooth and, in its place, reshape the gum and subsequently create the digital diagnostic wax-up.

Thanks to this design step, the digital dental impression can be acquired also in the presence of the damaged tooth, and therefore sparing the patient a session for removing the damaged tooth before defining the endosseous implant.

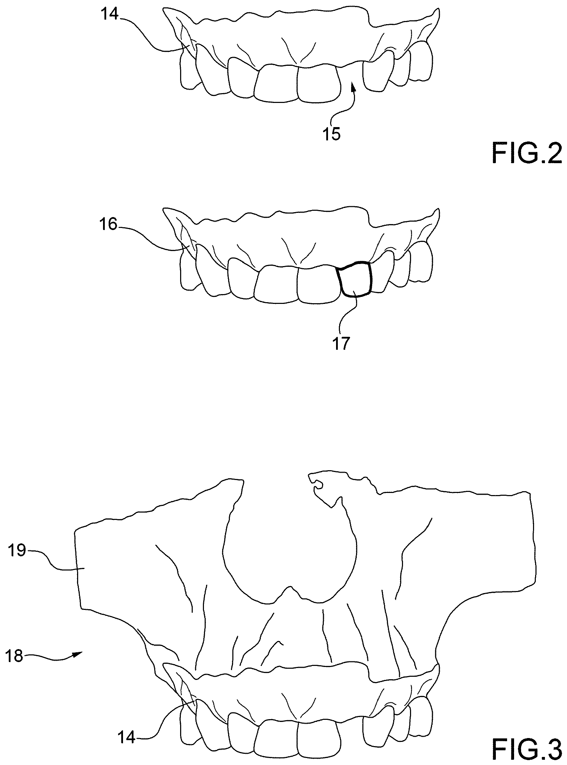

In particular, with reference to the example of Figure 2, wherein the damaged tooth is a lateral incisor of an upper arch, the processing of the digital dental impression produces two virtual dental impression models consisting of a first digital dental impression 14 without the damaged tooth and with the gum remodelled in the space 15 left by the damaged tooth virtually removed, and a second digital dental impression 16 comprising the digital diagnostic wax-up 17 in place of the damaged tooth. In other words, the digital dental impressions 14 and 16 differ only as to the presence, in the second, of the digital diagnostic wax-up 17. The two digital dental impressions 14 and 16 are preferably saved in STL format, which is a data format that is used by the first CAD software.

According to a further embodiment of the invention, the digital dental impression 14 and the digital diagnostic wax-up 17 are saved in two separate files, but linked from the point of view of the position, i.e. with the digital diagnostic wax-up 17 correctly positioned in the space 15. In other words, the spatial coordinates of the digital dental impression 14 and the digital diagnostic wax-up 17 refer to the same reference system. Preferably, the two files of the digital dental impression 14 and of the digital diagnostic wax-up 17 are in STL format.

The X-ray data and at least the digital dental impression 14 are imported into a second CAD software, in particular a software for the dental surgical planning of a known type, and through the latter combined so as to create an overall three-dimensional model of the dental arch. The second CAD software is normally used by a dentist, i.e. the dentist who is treating the patient.

Figure 3 is a graphic representation of the overall three-dimensional model obtained and displayed by the second CAD software. The overall model, indicated with 18, comprises the X-ray data, which are represented as an image of the bone structure of the oral cavity, in this particular case of the maxilla, and are indicated as a whole with 19, and the digital dental impression 14. The digital dental impression 14 is superimposed on the X-ray data 19 so as to make the teeth of the digital dental impression 14 coincide with the teeth of the X-ray data 19. Such superimposition is carried out automatically by the second CAD software through a suitable routine that uses points of reference entered on screen by the dentist.

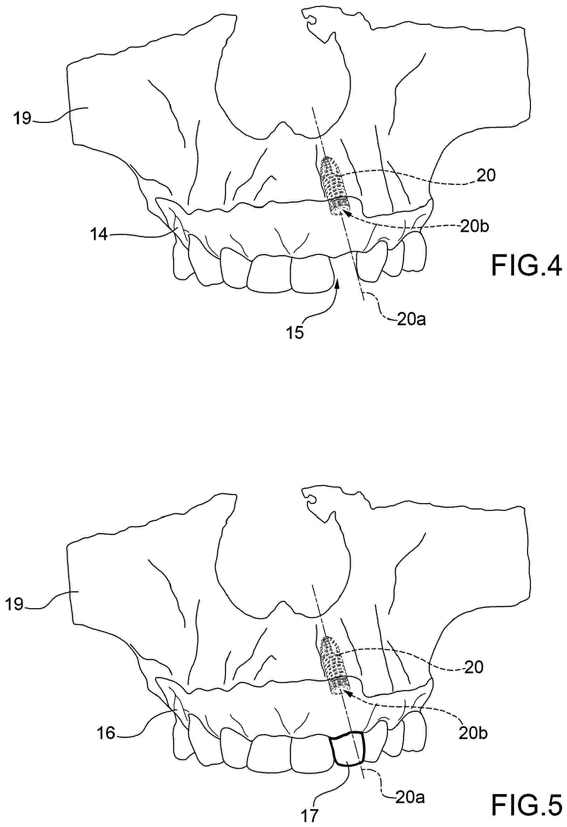

With reference to Figure 4, the dentist uses the second CAD software for selecting an endosseous implant model 20, i.e. a virtual endosseous implant, among a plurality of endosseous implant models (not shown) provided by the second CAD software and corresponding to as many real endosseous implants available on the market, and for suitably positioning the endosseous implant model 20 in the overall model 18 at the space 15.

The endosseous implant model 20, illustrated with a dashed line in Figure 4, has a longitudinal axis 20a and a hole 20b that is blind coaxial with the axis 20a for the conical coupling with an abutment, not shown because not yet designed at this stage.

The selection and positioning of the endosseous implant model 20 are carried out based on the X-ray data 19, in particular based on the structure and consistency of the bone at the space 15, and based on the digital dental impression 14, in particular based on the position and inclination of the teeth adjacent to the space 15. Therefore, the positioning of the endosseous implant model 20 comprises the search for the best orientation of the axis 20a of the endosseous implant model 20 with respect to the structure of the bone and the inclination of the teeth adjacent to the space 15.

According to a further embodiment of the invention, the digital dental impression 16 is also imported into the second CAD software and combined with the X-ray data 19 so as to enrich the overall model 18 with the digital diagnostic wax-up 17. Given the substantial overlap between the digital dental impressions 14 and 16, the import of the digital dental impression 16 essentially consists in importing the digital diagnostic wax-ups 17 and information relating to the position thereof with respect to the digital dental impression 14. The combination of the digital dental impression 16 with the X-ray data 19 is performed in the same way described above with reference to the digital dental impression 14.

Also in this case, the superimposition is carried out automatically by means of a suitable routine of the second CAD software which uses points of reference entered on screen by the dentist.

According to a further embodiment of the invention, into the second CAD software the digital dental impression 14 and the digital diagnostic wax-up 17 are imported, the latter having been exported from the first CAD software in a respective STL file which includes relative position information with respect to the digital dental impression 14, i.e. spatial coordinates with respect to a reference system in common between the digital diagnostic wax-up 17 and the digital dental impression 14.

Figure 5 is a graphical representation of the overall model 18 wherein the image of the bone structure of the oral cavity is visible which represents the X-ray data 19 and the digital dental impression 16 which includes the digital diagnostic wax-up 17. The dentist acts on the interface of the second CAD software for selecting which of the two digital dental impressions 14 and 16 to display. The second CAD software displays the two digital dental impressions 14 and 16 with two different colours for quick identification on screen by the dentist. In the case of Figure 5, the digital dental impression 16 was selected.

According to the further aforementioned embodiment of the invention, the dentist selects and positions the endosseous implant model 20 also based on the digital dental impression 16, in particular based on the digital diagnostic wax-up 17.

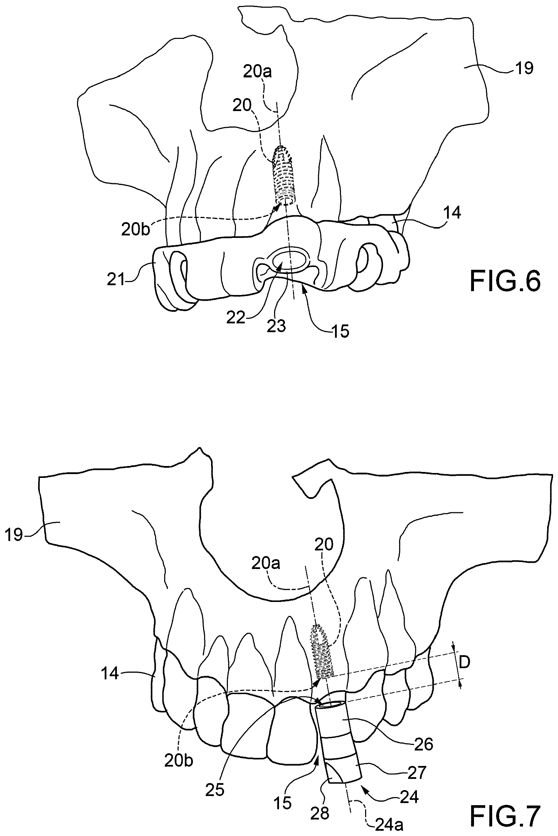

With reference to Figure 6, the dentist, always by means of the second CAD software, creates a surgical guide model 21 based on the shape of the digital dental impression 14 and of the position of the endosseous implant model 20. In particular, the surgical guide model 21 is designed so as to have a hole 22 at the space 15 and a bushing 23 which engages the hole 22 and is coaxial to the endosseous implant model 20.

The information given by the shape of the digital dental impression 14, which also reproduces the soft parts of the dental arch, is important because the actual surgical guide 5, which will be made based on the surgical guide model 21, will also have a mucosal support.

With reference to Figure 7, the second CAD software is provided with a library of models comprising a scan-abutment model 24, which is a virtual object having a predetermined shape, in particular a substantially cylindrical shape, and extending along its own axis 24a. For example, the scan-abutment model 24 has the shape of a physical scan-abutment used for intra-oral scans. The dentist selects the scan-abutment model 24 from the aforementioned library of models and the second CAD software automatically positions the scan-abutment model 24 in the overall model 18, in particular in the space 15, and orients it based on the position of the endosseous implant model 20. In particular, the scan-abutment model 24 is oriented coaxial to the axis 20a and with its own end 25 at a distance D from the mouth of the hole 20b of the endosseous implant model 20. The distance D is predetermined by the dentist and depends on the type of abutment to be created later by the dental technician.

In the example of Figure 7, the scan-abutment model 24 comprises two cylindrical portions 26 and 27. The portion 26 includes the end 25 which is located at the distance D from the endosseous implant model 20. The portion 27 has a chamfer 28 which facilitates the recognition of the shape of the scan-abutment model 24 by the first CAD software, as will be better explained below.

At this point, the scan-abutment model 24 and its position with respect to the digital dental impression 14 are transferred from the second CAD software to the first CAD software.

In other words, what is transferred from the second CAD software to the first CAD software are the scan-abutment model 24 and the spatial coordinates of its position with respect to a reference system in common between the scan-abutment model 24 and the digital dental impression 14. In this way, the first CAD software, which already has the digital dental impression 14 available, will also have the scan-abutment model 24 available, rigidly connected to the digital dental impression 14. The position of the scan-abutment model 24 with respect to the digital dental impression 14 is fixed and defined by the processing carried out by the second CAD software and described above. Consequently, in the first CAD software the position of the endosseous implant model 20 with respect to the digital dental impression 14 is inferable from the position of the scan-abutment model 24.

The scan-abutment model 24 and related position information are exported from the second CAD software, preferably in STL format, so that they can be imported into the first CAD software, which operates on files preferably in STL format.

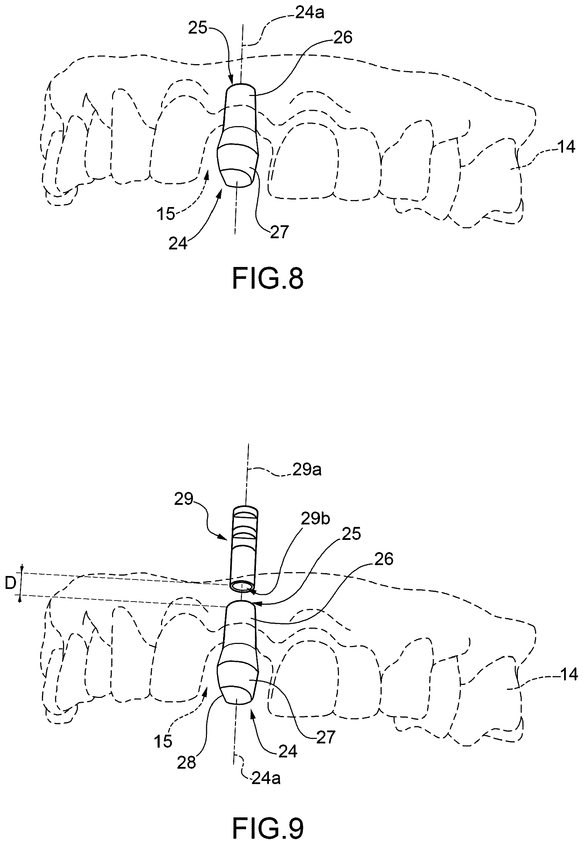

Figure 8 illustrates the digital dental impression 14, represented with a dashed line, and the scan-abutment model 24, in a case where the damaged tooth is a central incisor of an upper arch.

With reference to Figure 9, wherein the corresponding elements are indicated with the same numerals as Figure 8, the first CAD software comprises a library of objects which comprises a laboratory analog model 29, i.e. a model of an element which replicates some geometrical features of the endosseous implant model 20. In particular, the laboratory analog model 29 has a longitudinal axis 29a and a hole 29b that is blind, which is coaxial with the axis 29a and has the same longitudinal section as the hole 20b of the endosseous implant model 20 (Figures 4-7). In other words, the laboratory analog model 29 is a simplified endosseous implant model having a longitudinal conical coupling hole, the longitudinal section whereof exactly replicates that of the hole 20b.

The laboratory analog model 29 is positioned with respect to the digital dental impression 14 based on the position of the scan-abutment model 24. More precisely, the laboratory analog model 29 is positioned coaxial with the axis 24a with the mouth of the hole 29a at the distance D from the end 25 of the scan-abutment 24. In this way, the laboratory analog model 29 assumes the same position that the endosseous implant model 20 had in the second CAD software.

The selection and the positioning of the laboratory analog model 29 is performed automatically by means of a best-fitting routine of the first CAD software which recognizes the shape of the scan-abutment model 24, and in particular the chamfer 28. More in detail, the laboratory analog model 29 is rigidly combined with a further scan-abutment model (not shown) identical to the scan-abutment model 24 and the best-fitting routine of the first CAD software automatically superimposes the two scan-abutments models thus positioning the laboratory analog model 29 correctly.

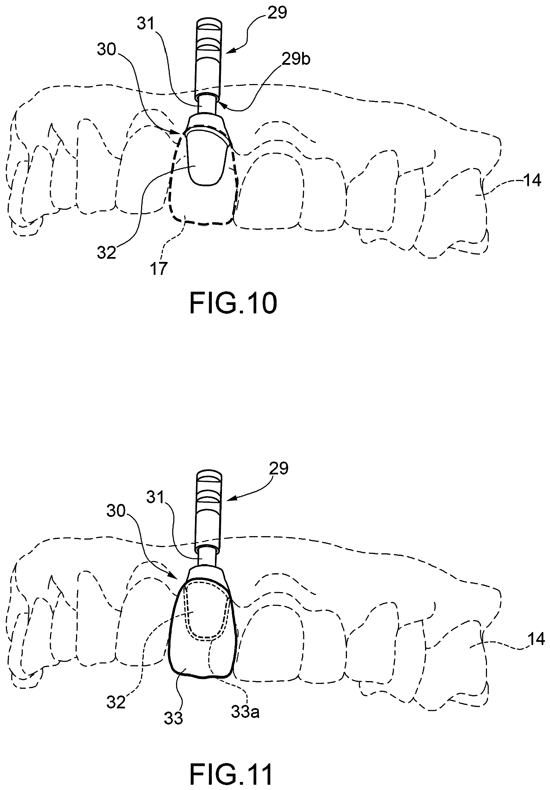

With reference now to Figure 10, wherein the corresponding elements are indicated with the same numerals as in Figure 9, the dental technician through the first CAD software creates and positions an abutment model 30 based on position information of the scan-abutment model 24 and of the digital diagnostic wax-up 17 with respect to the digital dental impression 14 and based on the shape of the digital diagnostic wax-up 17, the latter being already available to the first CAD software. In particular, the abutment model 30 is created so as to be coupled with the laboratory analog model 29, whose position, as already described above, is defined by the position of the scan-abutment model 24.

More in detail, the abutment model 30 comprises a first portion 31 of known shape, positioned so as to engage with interference the hole 29b of the laboratory analog model 29 by means of conical coupling and a second portion 32 shaped so as to define a shape coupling with a cavity of a dental prosthesis.

The portion 31 is a model obtained by digitizing a conical coupling element of commercial type which is normally combined with an endosseous implant. Therefore, in actual fact, the portion 31 is positioned according to the position of the scan-abutment model 24. In particular, the library of objects of the first CAD software comprises, in addition to the laboratory analog model 29, also the portion 31 and the selection of the laboratory analog model 29 involves the selection of a corresponding portion 31. The portion 32, instead, is modelled by the dental technician taking into account the position and the overall shape of the digital diagnostic wax-up 17.

With reference to Figure 11, the dental technician, by means of the first CAD software, creates a dental prosthesis model 33 based on the digital diagnostic wax-up 17 (Figure 2) and on the abutment model 30. In particular, the dental prosthesis model 33 has an outer shape corresponding to that of the digital diagnostic wax-up 17 and a cavity 33a shaped so as to have a shape complementary to that of the portion 32 of the abutment model 30 for defining a shape coupling between the latter and the dental prosthesis model 33.

Preferably, the portion 32 of the abutment model 30 and the cavity 33a of the dental prosthesis model 33 are modelled jointly taking into account the digital diagnostic wax-up 17.

At this point, the dental technician has all the information and digital models for obtaining all the components of the dental implant-prosthetic kit 1 (Figure 1) .

Since each endosseous implant model provided by the second CAD software corresponds to a respective endosseous implant of commercial type, it follows that the selection of the endosseous implant model 20 (Figure 4) necessarily involves the selection of the endosseous implant 2 among a plurality of endosseous implants of commercial type.

The burs 4 of the dental implant-prosthetic kit 1 (Figure 1) are selected among a plurality of commercially available burs based on the endosseous implant 2 selected and following a known protocol. Normally, to insert the endosseous implant 2 into the bone it is necessary to first use a bur 4 having a reduced diameter and then one or two burs 4 in sequence having a diameter gradually closer to the maximum diameter of the endosseous implant 2.

The surgical guide 5 is produced by means of a 3D printer for the additive production of PMMA, known per se and not illustrated, controlled by a first CAM software based on the surgical guide model 21. The surgical guide model 21 is exported from the second CAD software and imported into the first CAM software.

The bushing 6 is determined based on the endosseous implant 2 selected and then inserted into the appropriate hole of the surgical guide 5.

The abutment 8 and the dental prosthesis 7 are manufactured by means of at least one machine tool controlled by at least one further CAM software based on the abutment model 30 and on the dental prosthesis model 33, respectively.

In particular, the portion 10 of the abutment 8 is manufactured by working a block of material consisting of zirconia (zirconium oxide) or titanium, by means of a machine tool, in particular a multi-axis milling machine of a known type, for example a five-axis milling machine, controlled by a second CAM software based on the abutment model 30. If the worked block is made of zirconia, it is subsequently sintered following a known process. The portion 9 is determined based on the endosseous implant 2 selected. In particular, as already mentioned, the portion 9 is a conical coupling element of commercial type which is supplied in combination with a corresponding endosseous implant 2.

The dental prosthesis 7 is produced by working a block of material consisting for example of PMMA by means of a machine tool, in particular a multi-axis milling machine of a known type, controlled by a third CAM software based on the dental prosthesis model 33.

The positioning coping 13 is manufactured by working a block of material consisting for example of PMMA by means of the same machine tool used for manufacturing the dental prosthesis 7 and controlled always based on the dental prosthesis model 33. The hole 13b is made by means of a drill or by the aforementioned machine tool. The axis of the hole 13b is oriented so as to be coaxial with the axis 2a of the hole 3 of the endosseous implant 2 when the abutment 8 is coupled with the endosseous implant 2 and the positioning coping 13 is coupled with the abutment 8.

In use, the dental implant-prosthetic kit 1 allows the dentist to apply the dental prosthesis 7 to the patient in a single session. In fact, in a single session it is possible to prepare the bone in the space 12 of the dental arch 11 (Figure 1) by means of the burs 4, insert the endosseous implant 2 in the hole made in the bone, couple the portion 9 of the abutment 8 with the hole 3 of the endosseous implant 2 taking care to adjust the reciprocal angular position between the endosseous implant 2 and the abutment 8 so as to correctly position the dental prosthesis 7 with respect to the other teeth of the dental arch 11, fix the abutment 8 to the endosseous implant 2 by means of a small diameter screw which crosses the abutment 8 coaxially to the portion 9, and finally fix the dental prosthesis 7 to the portion 10 of the abutment 8 by means of a suitable cement or adhesive for dental prostheses.

Advantageously, the positioning coping 13 can be used to facilitate the correct angular positioning of the abutment 8 with respect to the endosseous implant 2 and therefore the correct positioning of the dental prosthesis 7.

In fact, the positioning coping 13 is temporarily coupled with the abutment 8 after the latter has been coupled, but not fixed, with the endosseous implant 2. By moving the positioning coping 13 so as to position it correctly with respect to the other teeth of the dental arch 11, the reciprocal angular position between the endosseous implant 2 and the abutment 8 is adjusted. When the dentist deems the position of the dental prosthesis 13 to be correct, he/she fixes the abutment 8 to the endosseous implant 2 by means of the screw, passing it through the hole 13b, removes the positioning coping 13 from the abutment 8 and cements or glues the dental prosthesis 7 to the abutment 8.

According to a further embodiment of the present invention, not illustrated, applicable to the case wherein it is necessary to replace at least two teeth adjacent to each other (a so-called fixed dental bridge), the dental implant-prosthetic kit differs from the one illustrated in Figure 1 obviously in that it comprises at least two endosseous implants, of the endosseous implant 2 type, at least two abutments, of the abutment 8 type, and at least two dental prostheses, of the dental prosthesis 7 type, and in that the surgical guide includes at least two bushings, of the bushing 6 type. Furthermore, the dental implant-prosthetic kit of such further embodiment differs from the one illustrated in Figure 1 in that it comprises at least two positioning copings, which have inner cavities the same as those of the respective dental prostheses, but standard outer shapes of known type, i.e. not reproducing the shapes of the respective dental prostheses.

Therefore, each of the positioning copings of the further embodiment of the invention is manufactured analogously to the positioning coping 13 of Figure 1 with the difference that the machine tool is controlled based on a part of the dental prosthesis model 33 which does not comprise the outer shape and which comprises the cavity 33a.

The outer shape of the positioning copings is irrelevant for the correct positioning of the abutments on the respective endosseous implants, as the reciprocal position of the abutments is predetermined and therefore it is not possible to adjust the reciprocal angular position between each abutment and the respective endosseous implant.

Although the invention described above makes particular reference to a very precise embodiment example, it is not to be considered limited to such embodiment example, all those variants, modifications or simplifications covered by the appended claims falling within the scope thereof. For example, the dental implant-prosthetic kit 1 can comprise more endosseous implants 2 and more dental prostheses 7 up to covering an entire dental arch.

The main advantage of the method of the present invention is to considerably increase the success rate of the final result, thanks to the use of the scan-abutment model 24 (or virtual scan-abutment) and the use of a conometric connection between the endosseous implant 2 and the abutment 8 in combination with the fully digital design process of the implant-prosthetic kit 1.

In particular, the scan-abutment model 24 allows transferring the position information of the endosseous implant model 20 between the second and first CAD software only digitally, consequently eliminating the inaccuracies inherent in intermediate information acquisition steps, such as obtaining a dental impression for determining the position of the endosseous implant already inserted in the oral cavity.

Furthermore, the conometric connection leads to an extreme simplification of the entire manufacturing process of the implant-prosthetic kit 1, thus reducing the possibility of errors. In particular, the conometric connection does not create angular orientation constraints between the abutment 8 and the endosseous implant 2, thus facilitating the dentist both in the positioning of the endosseous implant model 20, and therefore of the endosseous implant 2, during the design by means of the second CAD software, and in the positioning of the abutment 8 on the endosseous implant 2 during the application of the implant-prosthetic assembly (endosseous implant 2, abutment 8 and dental prosthesis 7) to the patient. In other words, the abutment 8 can rotate 360 degrees on the endosseous implant 2 allowing the maximum flexibility of positioning. Finally, the conometric connection allows choosing a bushing 6 devoid of elements of spatial orientation and therefore simplifies the manufacture of the surgical guide 5.

Another important advantage of the method of the present invention is to reduce the number and duration of the sessions necessary for the application of the dental implant-prosthetic assembly, with evident advantages for both the patient and the dentist. In fact, with the dental implant-prosthetic kit 1 it is possible to insert the implant 2 and apply the dental prosthesis 7 in a single session. This advantage is made possible by the design of the kit completely via software, starting from X-ray data and digital dental impression, using more CAD software of a substantially known type, without intermediate steps of acquisition of new data and information of the oral cavity and consequent digitization. A key step in such design is the transfer of position information of the endosseous implant model 20 from the second CAD software to the first CAD software via the scan-abutment model 24 (virtual scan-abutment).

## Claims

1. A method to manufacture a dental implant-prosthetic kit (1) comprising at least one endosseous implant (2), at least two burs (4) to prepare the bone for the insertion of the endosseous implant (2), a surgical guide (5) provided with at least one bushing (6) to guide the burs (4) during the preparation of the bone, at least one dental prosthesis (7) and at least one abutment (8), which comprises a first portion (9) engageable in a longitudinal hole (3) of the endosseous implant (2) by means of a conical coupling with interference, and a second portion (10) coupleable to the dental prosthesis (7), the method comprising:
- acquiring X-ray data (19) of the bone structure of the oral cavity of a patient;
- acquiring a digital dental impression (14) of a portion of a dental arch (11) of the patient where there is or was a damaged tooth to be replaced;
- by means of a first CAD software for dental modelling, processing the digital dental impression (14) to create a digital diagnostic wax-up (17) in place of the damaged tooth;
- by means of a second CAD software for dental surgical planning, creating an overall three-dimensional model (18) of the dental arch (11) by combining said X-ray data (19) with said digital dental impression (14);
- by means of the second CAD software, selecting an endosseous implant model (20) among a plurality of endosseous implant models and placing it in the overall three-dimensional model (18);
- by means of the second CAD software, creating a surgical guide model (21) based on the digital dental impression (14) and on the position of the endosseous implant model (20);
- by means of the second CAD software, placing in the overall three-dimensional model (18) a scan-abutment model (24) based on the position of the endosseous implant model (20);
- transferring from the second CAD software to the first CAD software the scan-abutment model (24) and information of its position in relation to the digital dental impression (14);
- by means of the first CAD software, creating an abutment model (30) based on the position of the scan-abutment model (24) and on the position and shape of the digital diagnostic wax-up (17);
- by means of the first CAD software, creating a dental prosthesis model (33) based on the digital diagnostic wax-up (17) and on the abutment model (30);
- manufacturing the surgical guide (5) by means of a 3D printer controlled by a first CAM software based on the surgical guide model (21);
- manufacturing said abutment (8) and dental prosthesis (7) by means of at least one machine tool controlled by at least one further CAM software based on the abutment model (30) and on the dental prosthesis model (33), respectively;
- selecting the endosseous implant (2) corresponding to the endosseous implant model (20) among a plurality of endosseous implants corresponding to said plurality of endosseous implant models; and
- selecting the burs (4) among a plurality of burs (4) based on the endosseous implant (2) selected.

2. A method according to Claim 1, wherein said dental prosthesis (7) has a cavity (7a), which is shaped so as to define a shape coupling with said second portion (10) of said abutment (8), and said dental implant-prosthetic kit comprises a positioning coping (13) having a cavity (13a) with the same shape of the cavity (7a) of the dental prosthesis (7) so as to be coupled, in use, to the second portion (10) of the abutment (8) in order to make it easier for the latter to be correctly positioned relative to the endosseous implant (2) before fixing the abutment (8) to the endosseous implant (2); said dental prosthesis model (33) being created so as to have a cavity (33a) having a shape that is complementary to the one of a portion (32) of said abutment model (30); the method comprising:
- manufacturing the positioning coping (13) by means of said at least one machine tool controlled by at least one further CAM software based on part of the dental prosthesis model (33) comprising the cavity (33a) of the dental prosthesis model.

3. A method according to Claim 2, wherein said positioning coping (13) has the same outer shape as said dental prosthesis (7) and is manufactured by means of said at least one machine tool controlled by at least one further CAM software based on the dental prosthesis model (33).

4. A method according to any one of the claims from 1 to 3, wherein said endosseous implant model (20) is selected and placed based on said X-ray data (19) and on said digital dental impression (14).

5. A method according to any one of the claims from 1 to 3, wherein said overall three-dimensional model (18) is created by combining said X-ray data (19) with said digital dental impression (14) and said digital diagnostic wax-up (17); said endosseous implant model (20) being placed in the overall three-dimensional model (18) based on the X-ray data (19), on the digital dental impression (14) and on the digital diagnostic wax-up (17).

6. A method according to any one of the claims from 1 to 5, wherein said abutment model (30) comprises a first portion (31) for a conical coupling and a second portion (32) for a coupling to a dental prosthesis (7); creating an abutment model (30) comprising:
- placing the first portion (31) of the abutment model (30) as a function of the position of the scan-abutment model (24) ; and
- modelling the second portion (32) of the abutment model (30) as a function of position and shape of the digital diagnostic wax-up (17).

7. A method according to Claim 6, wherein said endosseous implant model (20) comprises a hole (20b) for a conical coupling; placing the first portion (31) of the abutment model (30) as a function of the position of the scan-abutment model (24) comprising:
- placing a simplified endosseous implant model (29) as a function of the position of the scan-abutment model (24), said simplified endosseous implant model (29) having a hole (29a) having the same longitudinal section as the hole (20a) of the endosseous implant model (20); and
- placing the first portion (31) of the abutment model (30) in such a way as to engage with interference the hole (29a) of the simplified endosseous implant model (29).

8. A method according to Claim 6 or 7, wherein creating a dental prosthesis model (33) comprises:
- modelling the outer shape of the dental prosthesis model (33) so that it corresponds to the digital diagnostic wax-up (17); and
- modelling a cavity (33a) of the dental prosthesis model (33) so that it assumes a shape which is complementary to that of said second portion of the abutment model (30).

9. A method according to any one of the claims from 1 to 8, wherein said machine tool is a multi-axis milling machine.

## Patentansprüche

1. Verfahren zur Herstellung eines Prothesen-Zahnimplantat-Kits (1), umfassend mindestens ein enossales Implantat (2), mindestens zwei Bohrer (4), um den Knochen zum Einsetzen des enossalen Implantats (2) vorzubereiten, eine chirurgische Bohrschablone (5), die mit mindestens einer Buchse (6) versehen ist, um die Bohrer (4) während der Vorbereitung des Knochens zu führen, mindestens eine Zahnprothese (7) und mindestens ein Abutment (8), das einen ersten Abschnitt (9) umfasst, der in ein längliches Loch (3) des enossalen Implantats (2) mittels einer konischen Kopplung mit Übermaß eingreifen kann, und einen zweiten Abschnitt (10), der an die Zahnprothese (7) gekoppelt werden kann, wobei das Verfahren umfasst:
- Erfassen von Röntgendaten (19) der Knochenstruktur der Mundhöhle eines Patienten;
- Erfassen eines digitalen Gebissabdrucks (14) eines Abschnitts eines Zahnbogens (11) des Patienten, wo ein beschädigter Zahn, der zu ersetzen ist, ist oder war;
- mittels einer ersten CAD-Software für Zahnmodellierung, Verarbeiten des digitalen Gebissabdrucks (14), um ein digitales, diagnostisches Wax-up (17) anstelle des beschädigten Zahns zu erstellen;
- mittels einer zweiten CAD-Software für chirurgische Zahnplanung, Erstellen eines dreidimensionalen Gesamtmodells (18) des Zahnbogens (11), indem die Röntgendaten (19) mit dem digitalen Gebissabdruck (14) kombiniert werden;
- mittels der zweiten CAD-Software, Auswählen eines enossalen Implantatmodells (20) aus einer Vielzahl von enossalen Implantatmodellen und sein Platzieren in dem dreidimensionalen Modell (18);
- mittels der zweiten CAD-Software, Erstellen eines chirurgischen Bohrschablonenmodells (21) basierend auf dem digitalen Gebissabdruck (14) und auf der Position des enossalen Implantatmodells (20);
- mittels der zweiten CAD-Software, Platzieren eines Scan-Abutment-Modells (24) in dem dreidimensionalen Gesamtmodell (18) basierend auf der Position des enossalen Implantatmodells (20);
- Übertragen des Scan-Abutment-Modells (24) und von Informationen über seine Position in Bezug auf den digitalen Gebissabdruck (14) von der zweiten CAD-Software auf die erste CAD-Software;
- mittels der ersten CAD-Software, Erstellen eines Abutment-Modells (30) basierend auf der Position des Scan-Abutment-Modells (24) und auf der Position und Form des digitalen, diagnostischen Wax-ups (17);
- mittels der ersten CAD-Software, Erstellen eines Zahnprothesenmodells (33) basierend auf dem digitalen, diagnostischen Wax-up (17) und auf dem Abutment-Modell (30);
- Herstellen der chirurgischen Bohrschablone (5) mittels eines 3D-Druckers, der von einer ersten CAM-Software basierend auf dem chirurgischen Bohrschablonenmodell (21) gesteuert wird;
- Herstellen des Abutments (8) und der Zahnprothese (7) mittels mindestens einer Werkzeugmaschine, die von mindestens einer weiteren CAM-Software jeweils basierend auf dem Abutment-Modell (30) und auf dem Zahnprothesenmodell (33) gesteuert wird;
- Auswählen des enossalen Implantats (2) entsprechend dem enossalen Implantatmodell (20) aus einer Vielzahl von enossalen Implantaten entsprechend der Vielzahl von enossalen Implantatmodellen; und
- Auswählen der Bohrer (4) aus einer Vielzahl von Bohrern (4) basierend auf dem ausgewählten enossalen Implantat (2).

2. Verfahren nach Anspruch 1, wobei die Zahnprothese (7) einen Hohlraum (7a) aufweist, der so geformt ist, dass er eine Form definiert, die sich mit dem zweiten Abschnitt (10) des Abutments (8) koppelt, und das Prothesen-Zahnimplantat-Kit eine Positionierkappe (13) umfasst, die einen Hohlraum (13a) aufweist, der die gleiche Form wie der Hohlraum (7a) der Zahnprothese (7) aufweist, sodass sie, in Verwendung, an den zweiten Abschnitt (10) des Abutments (8) gekoppelt wird, um es für Letzteres einfacher zu machen, in Bezug auf das enossale Implantat (2) richtig positioniert zu werden, bevor das Abutment (8) an dem enossalen Implantat (2) befestigt wird; wobei das Zahnprothesenmodell (33) so erstellt wird, dass es einen Hohlraum (33a) aufweist, der eine Form aufweist, die komplementär zu jener eines Abschnitts (32) des Abutment-Modells (30) ist; wobei das Verfahren umfasst:
- Herstellen der Positionierkappe (13) mittels der mindestens einen Werkzeugmaschine, die von mindestens einer weiteren CAM-Software basierend auf einem Teil des Zahnprothesenmodells (33) gesteuert wird, der den Hohlraum (33a) des Zahnprothesenmodells umfasst.

3. Verfahren nach Anspruch 2, wobei die Positionierkappe (13) die gleiche Außenform wie die Zahnprothese (7) aufweist und mittels der mindestens einen Werkzeugmaschine hergestellt wird, die von mindestens einer weiteren CAM-Software basierend auf dem Zahnprothesenmodell (33) gesteuert wird.

4. Verfahren nach einem der Ansprüche 1 bis 3, wobei das enossale Implantatmodell (20) basierend auf den Röntgendaten (19) und auf dem digitalen Gebissabdruck (14) ausgewählt und platziert wird.

5. Verfahren nach einem der Ansprüche 1 bis 3, wobei das dreidimensionale Gesamtmodell (18) erstellt wird, indem die Röntgendaten (19) mit dem digitalen Gebissabdruck (14) und dem digitalen, diagnostischen Wax-up (17) kombiniert werden; wobei das enossale Implantatmodell (20) in dem dreidimensionalen Gesamtmodell (18) basierend auf den Röntgendaten (19), auf dem digitalen Gebissabdruck (14) und auf dem digitalen, diagnostischen Wax-up (17) platziert wird.

6. Verfahren nach einem der Ansprüche 1 bis 5, wobei das Abutment-Modell (30) einen ersten Abschnitt (31) für eine konische Kopplung und einen zweiten Abschnitt (32) für eine Kopplung an eine Zahnprothese (7) umfasst; wobei das Erstellen eines Abutment-Modells (30) umfasst:
- Platzieren des ersten Abschnitts (31) des Abutment-Modells (30) in Abhängigkeit von der Position des Scan-Abutment-Modells (24); und
- Modellieren des zweiten Abschnitts (32) des Abutment-Modells (30) in Abhängigkeit von Position und Form des digitalen, diagnostischen Wax-ups (17).

7. Verfahren nach Anspruch 6, wobei das enossale Implantatmodell (20) ein Loch (20b) für eine konische Kopplung umfasst; wobei das Platzieren des ersten Abschnitts (31) des Abutment-Modells (30) in Abhängigkeit von der Position des Scan-Abutment-Modells (24) umfasst:
- Platzieren eines vereinfachten enossalen Implantatmodells (29) in Abhängigkeit von der Position des Scan-Abutment-Modells (24), wobei das vereinfachte enossale Implantatmodell (29) ein Loch (29a) aufweist, das den gleichen Längsquerschnitt wie das Loch (20a) des enossalen Implantatmodells (20) aufweist; und
- Platzieren des ersten Abschnitts (31) des Abutment-Modells (30) so, dass er mit Übermaß in das Loch (29a) des vereinfachten enossalen Implantatmodells (29) eingreift.

8. Verfahren nach Anspruch 6 oder 7, wobei das Erstellen eines Zahnprothesenmodells (33) umfasst:
- Modellieren der Außenform des Zahnprothesenmodells (33), sodass es dem digitalen, diagnostischen Wax-up (17) entspricht; und
- Modellieren eines Hohlraums (33a) des Zahnprothesenmodells (33), sodass es eine Form annimmt, die komplementär zu jener des zweiten Abschnitts des Abutment-Modells (30) ist.

9. Verfahren nach einem der Ansprüche 1 bis 8, wobei die Werkzeugmaschine eine Mehrachs-Fräsmaschine ist.

## Revendications

1. Une méthode de fabrication d'un kit prothétique d'implant dentaire (1) comprenant au moins un implant endo-osseux (2), au moins deux fraises (4) destines à préparer l'os pour l'insertion de l'implant endo-osseux (2), un guide chirurgical (5) muni d'au moins une bague (6) pour guider les fraises (4) pendant la préparation de l'os, au moins une prothèse dentaire (7) et au moins un pilier (8), qui comprend une première partie (9) qui peut être engagée dans un orifice longitudinal (3) de l'implant endo-osseux (2) à l'aide d'un couplage conique avec interférence, et une seconde partie (10) qui peut être couplée à la prothèse dentaire (7), la méthode comprenant :
- l'acquisition de données à rayons X (19) de la structure osseuse de la cavité buccale d'un patient ;
- l'acquisition d'une empreinte dentaire numérique (14) d'une partie d'une arcade dentaire (11) du patient au niveau de laquelle se trouve ou se trouvait une dent abîmée à remplacer ;
- à l'aide d'un premier logiciel de CAO de modélisation dentaire, le traitement de l'empreinte dentaire numérique (14) afin de créer un modelage en cire de diagnostic numérique (17) à la place de la dent abîmée ;
- à l'aide d'un second logiciel de CAO de planification chirurgicale dentaire, la création d'un modèle global en trois dimensions (18) de l'arcade dentaire (11) en combinant lesdites données à rayons X (19) à ladite empreinte dentaire numérique (14) ;
- à l'aide du second logiciel de CAO, la sélection d'un modèle d'implant endo-osseux (20) parmi une pluralité de modèles d'implants endo-osseux et son placement dans le modèle global en trois dimensions (18) ;
- à l'aide du second logiciel de CAO, la création d'un modèle de guide chirurgical (21) sur la base de l'empreinte dentaire numérique (14) et de la position du modèle d'implant endo-osseux (20) ;
- à l'aide du second logiciel de CAO, le placement, dans le modèle global en trois dimensions (18), d'un modèle de pilier de scan (24) sur la base de la position du modèle d'implant endo-osseux (20) ;
- le transfert, du second logiciel de CAO au premier logiciel de CAO, du modèle de pilier de scan (24) et des informations sur sa position par rapport à l'empreinte dentaire numérique (14) ;
- à l'aide du premier logiciel de CAO, la création d'un modèle de pilier (30) sur la base de la position du modèle de pilier de scan (24) et de la position et de la forme du modelage en cire de diagnostic numérique (17) ;
- à l'aide du premier logiciel de CAO, la création d'un modèle de prothèse dentaire (33) sur la base du modelage en cire de diagnostic numérique (17) et du modèle de pilier (30) ;
- la fabrication du guide chirurgical (5) à l'aide d'une imprimante 3D pilotée par un premier logiciel de PAO sur la base du modèle de guide chirurgical (21) ;
- la fabrication dudit pilier (8) et de la prothèse dentaire (7) à l'aide d'au moins une machine-outil pilotée par au moins un autre logiciel de PAO sur la base du modèle de pilier (30) et du modèle de prothèse dentaire (33), respectivement ;
- la sélection de l'implant endo-osseux (2) qui correspond au modèle d'implant endo-osseux (20) parmi une pluralité d'implants endo-osseux qui correspondent à ladite pluralité de modèles d'implants endo-osseux ; et
- la sélection des fraises (4) parmi une pluralité de fraises (4) sur la base de l'implant endo-osseux (2) sélectionné.

2. Une méthode selon la revendication 1, dans laquelle ladite prothèse dentaire (7) possède une cavité (7a), qui est formée de façon à définir un couplage de forme avec ladite seconde partie (10) dudit pilier (8), et ledit kit prothétique d'implant dentaire comprend un adaptateur de positionnement (13) ayant une cavité (13a) de la même forme que la cavité (7a) de la prothèse dentaire (7) de façon à être couplé, pendant l'utilisation, à la seconde partie (10) du pilier (8) afin d'aider ce dernier à être correctement positionné par rapport à l'implant endo-osseux (2) avant de fixer le pilier (8) sur l'implant endo-osseux (2) ; ledit modèle de prothèse dentaire (33) tant créé de façon à avoir une cavité (33a) ayant une forme complémentaire à celle d'une partie (32) dudit modèle de pilier (30) ; le procédé comprenant :
- la fabrication de l'adaptateur de positionnement (13) à l'aide de ladite au moins une machine-outil pilotée par au moins un autre logiciel de PAO sur la base d'une partie du modèle de prothèse dentaire (33) comprenant la cavité (33a) du modèle de prothèse dentaire.

3. Une méthode selon la revendication 2, dans laquelle ledit adaptateur de positionnement (13) possède la même forme externe que ladite prothèse dentaire (7) et est fabriqué à l'aide de ladite au moins une machine-outil pilotée par au moins un autre logiciel de PAO sur la base du modèle de prothèse dentaire (33).

4. Une méthode selon l'une quelconque des revendications 1 à 3, dans laquelle ledit modèle d'implant endo-osseux (20) est choisi et placé sur la base desdites données à rayons X (19) et de ladite empreinte dentaire numérique (14).

5. Une méthode selon l'une quelconque des revendications 1 à 3, dans laquelle ledit modèle global en trois dimensions (18) est créé en combinant lesdites données à rayons X (19) avec ladite empreinte dentaire numérique (14) et ledit modelage en cire de diagnostic numérique (17) ; ledit modèle d'implant endo-osseux (20) étant placé dans le modèle global en trois dimensions (18) sur la base des données à rayons X (19), de l'empreinte dentaire numérique (14) et du modelage en cire de diagnostic numérique (17).

6. Une méthode selon l'une quelconque des revendications 1 à 5, dans laquelle ledit modèle de pilier (30) comprend une première partie (31) destinée à un couplage conique et une seconde partie (32) destinée à un couplage à une prothèse dentaire (7) ; la création d'un modèle de pilier (30) comprenant :
- le placement de la première partie (31) du modèle de pilier (30) en fonction de la position du modèle de pilier de scan (24) ; et
- la modélisation de la seconde partie (32) du modèle de pilier (30) en fonction de la position et de la forme du modelage en cire de diagnostic numérique (17).

7. Une méthode selon la revendication 6, dans laquelle ledit modèle d'implant endo-osseux (20) comprend un orifice (20b) destiné à un couplage conique ; le placement de la première partie (31) du modèle de pilier (30) en fonction de la position du modèle de pilier de scan (24) comprenant :
- le placement d'un modèle d'implant endo-osseux simplifié (29) en fonction de la position du modèle de pilier de scan (24), ledit modèle d'implant endo-osseux simplifié (29) ayant un orifice (29a) ayant la même section longitudinale que l'orifice (20a) du modèle d'implant endo-osseux (20) ; et
- le placement de la première partie (31) du modèle de pilier (30) de façon à engager avec interférence l'orifice (29a) du modèle d'implant simplifié (29).

8. Une méthode selon la revendication 6 ou 7, dans laquelle la création d'un modèle de prothèse dentaire (33) comprend :
- la modélisation de la forme externe du modèle de prothèse dentaire (33) de sorte qu'elle corresponde au modelage en cire de diagnostic numérique (17) ; et
- la modélisation d'une cavité (33a) du modèle de prothèse dentaire (33) de sorte qu'elle adopte une forme qui soit complémentaire à celle de ladite seconde partie du modèle de pilier (30).

9. Une méthode selon l'une quelconque des revendications 1 à 8, dans laquelle ladite machine-outil est une fraiseuse à plusieurs axes.
